# EUROPÄISCHE PATENTSCHRIFT

(11) **EP 3 543 062 B1**
(45) Veröffentlichungstag und Bekanntmachung des Hinweises auf die Patenterteilung: **04.08.2021**
(21) Anmeldenummer: 19161472.6
(22) Anmeldetag: 08.03.2019
(51) Int. Cl.: B60L 3/00, B60L 3/04, H02J 7/00, H02M 1/32

(54) **ZWISCHENKREISKONDENSATOR FÜR EIN ELEKTROMOTORISCH ANGETRIEBENES FAHRZEUG**
INTERMEDIATE CIRCUIT CAPACITOR FOR AN ELECTRIC VEHICLE
CONDENSATEUR DE CIRCUIT INTERMÉDIAIRE POUR UN VÉHICULE À MOTEUR ÉLECTRIQUE

(30) Priorität: 22.03.2018 DE 102018204382
(43) Veröffentlichungstag der Anmeldung: 25.09.2019
(73) Patentinhaber: AUDI AG, 85045 Ingolstadt (DE)
(72) Erfinder: Schiedermeier, Maximilian, 85049 Ingolstadt (DE)

(56) Entgegenhaltungen:
- WO-A2-2011/018434
- WO-A2-2015/082193
- WO-A2-2017/191135
- DE-A1-102008 061 585
- DE-A1-102015 217 287
- DE-A1-102016 203 172
- JP-A- 2008 097 991
- US-A1- 2014 286 064

## Beschreibung

Die Erfindung betrifft eine Baugruppe mit einem Zwischenkreiskondensator und ein elektromotorisch angetriebenes Fahrzeug mit einer solchen Baugruppe.

Elektromotorisch angetriebene Fahrzeuge, wie Elektrofahrzeuge oder Hybridfahrzeuge, weisen gewöhnlich ein Hochvoltnetz auf, welches ein als Energiespeicher wirkendes Hochvoltbatteriesystem, eine Leistungselektronik, einen Elektromotor, weitere Hochvoltkomponenten und ein sämtliche Komponenten miteinander verbindendes Hochvoltbussystem umfasst.

Da das Hochvoltbatteriesystem eine Gleichspannung liefert und der Elektromotor zumeist als eine von einem Wechselstrom angetriebene Drehstrommaschine ausgebildet ist, umfasst das Hochvoltnetz ferner zumindest einen als Wechselrichter wirkenden Zwischenschaltkreis mit sogenannten Zwischenkreiskondensatoren, um die Gleichspannung in eine Wechselspannung zu transformieren (Vortrieb) oder umgekehrt (Rekuperation).

Zwischenkreiskondensatoren können aber auch für solche Hochvoltkomponenten vorgesehen sein, welche mit einem Gleichstrom betrieben werden, beispielsweise eine Ladevorrichtung, eine Temperiervorrichtung für ein Kühlmittel oder die Fahrgastzelle oder eine Umspannvorrichtung zum Versorgen des 12V-Bordnetzes. In diesen Fällen dient ein Zwischenkreiskondensator dazu, die an der zugeordneten Hochvoltkomponente anliegende Gleichspannung zu stützen und Spannungsspitzen aufzunehmen, d. h. als ein Filter zu wirken.

Wie Fahrzeuge mit einem ausschließlichen Verbrennungsmotor müssen elektromotorisch angetriebene Fahrzeuge strengen Sicherheitsanforderungen genügen, um Insassen in der Fahrgastzelle des Fahrzeugs auch bei einem Unfall möglichst weitgehend zu schützen. Insbesondere ist, wie üblich, eine unfallbedingte Deformation der Fahrgastzelle mittels konstruktiver Maßnahmen soweit wie möglich zu verhindern. Die Konformität mit diesen Anforderungen müssen für eine Straßenzulassung des Fahrzeugs in speziellen und genormten Crashtests nachgewiesen werden.

Gegenüber Fahrzeugen mit einem ausschließlichen Verbrennungsmotor geht von dem Hochvoltnetz eines elektromotorisch angetriebenen Fahrzeugs bei einem Unfall allerdings eine zusätzliche Gefahr für die Insassen des Fahrzeugs in der Fahrgastzelle oder auch für an der Unfallstelle außerhalb des Fahrzeugs gegenwärtige Personen aus. Entsprechend wird verlangt, das Hochvoltnetz des elektromotorisch angetriebenen Fahrzeugs nach einem Unfall möglichst spannungsfrei zu stellen. Eine Möglichkeit besteht darin, das Hochvoltbatteriesystem zu entladen.

So offenbart die DE 10 2013 215 581 A1 ein Batteriesystem mit einem Gehäuse, zumindest einer Batteriezelle, einem Entladeschalter und einem Entladewiderstand, welche sämtlich in dem Gehäuse des Batteriesystems angeordnet sind. Der Entladeschalter ist von außen betätigbar und bewirkt in einer Entladestellung einen durch den Entladewiderstand fließenden Entladestrom, durch den die mindestens eine Batteriezelle entladen wird. Auf diese Weise kann die Batteriezelle beispielsweise nach einem Unfall durch manuelles Betätigen des Entladeschalters entladen werden.

Demgegenüber offenbart die DE 10 2012 214 368 A1 ein Entlademodul für ein Batteriesystem eines elektromotorisch angetriebenen Fahrzeugs. Das Entlademodul umfasst einen Entladeschalter, welcher infolge eines Unfallsignals geschlossen wird, um eine Batteriezelle des Batteriesystems durch Entnehmen eines Entladestroms zu entladen. Bei diesem Entlademodul erfolgt also das Entladen des Batteriesystems automatisch, wenn der Entladeschalter ein Unfallsignal empfängt, welches durch entsprechende Sensoren erzeugt wird.

Allerdings berücksichtigen diese beiden Lösungen keine bei dem Unfall vorhandenen hochgespannten Ladezustände von in dem Fahrzeug verbauten Zwischenkreiskondensatoren. Diese können eine bestimmte Ladungsmenge speichern und bei entladenem Batteriesystem selbst wie eine Hochspannungsquelle wirken, welche nach einem Unfall eine Gefahr für Insassen des Fahrzeugs oder Personen außerhalb des Fahrzeugs darstellt. Die Sicherheit eines elektromotorisch angetriebenen Fahrzeugs lässt sich demnach weiter erhöhen, wenn bei einem Unfall zusätzlich eine Entladung der verbauten Zwischenkreiskondensatoren erfolgt.

Die DE 10 2012 020 019 A1 offenbart ein entsprechendes Entlademodul mit einer Entladeschaltung zum aktiven Entladen eines Zwischenkreiskondensators, welcher einer Hochvoltkomponente eines elektromotorisch angetriebenen Fahrzeugs zugeordnet ist. Um ein sicheres Entladen des Zwischenkreiskondensators auch in einem unsicheren Betriebszustand des Fahrzeugs, wie beispielsweise nach einem Unfall, zu gewährleisten, ist das Entlademodul separat von einem der Hochvoltkomponente zugeordneten Leistungselektronikmodul ausgebildet und in die Hochvoltkomponente integriert. DE 10 2008 061 585 A1 lehrt ein Entlademodul für einen Zwischenkreiskondensator, welches beim Entladen des Zwischenkreiskondensators die in dem Zwischenkreiskondensator gespeicherte elektrische Energie in eine Wärmeenergie umsetzt.

Obwohl die Hochvoltkomponente das integrierte Entlademodul vor einer die Funktion beeinträchtigenden Deformation schützen kann, kann bei dieser Lösung die erforderliche Verbindungsleitung zwischen dem Entlademodul und dem Zwischenkreiskondensator infolge unfallbedingter Deformationen durchtrennt werden, wodurch eine Entladung des Zwischenkreiskondensators ausbleibt.

Der Erfindung liegt daher die Aufgabe zugrunde, einen verbesserten Zwischenkreiskondensator zur Verfügung zu stellen, welcher bei einem Unfall eine sichere Entladung gewährleistet. Darüber hinaus ist es Aufgabe der Erfindung, ein Baugruppe mit einem Zwischenkreiskondensator sowie ein elektromotorisch angetriebenes Fahrzeug mit einer solchen Baugruppe zu schaffen.

Gegenstand der Erfindung ist eine Baugruppe mit einem Zwischenkreiskondensator für ein elektromotorisch angetriebenes Fahrzeug. Der Zwischenkreiskondensator kann einem Elektromotor oder einer anderen Hochvoltkomponente des Fahrzeugs zugeordnet sein, um als Teil eines Wechselrichters eine Wechselspannung für den Elektromotor bzw. beim Rekuperieren eine Gleichspannung zum Laden des Hochvoltbatteriesystems bereitzustellen oder eine an der Hochvoltkomponente anliegende Gleichspannung zu stützen.

Der Zwischenkreiskondensator weist in seinem Inneren eine Aufnahme für ein Entlademodul einer Hochvoltkomponente des Fahrzeugs auf. Auf diese Weise kann der Zwischenkreiskondensator ein in der Aufnahme angeordnetes Entlademodul wie eine Panzerung vor einer unfallbedingten Deformation schützen und eine bestimmungsgemäße Funktion des Entlademoduls auch nach einem Unfall ermöglichen.

Der Zwischenkreiskondensator umfasst mehrere Folienwickel. Ein hinsichtlich einer Wärmeabgabe verbesserter Kondensator mit einem Folienwickel ist in US 2014/0286064 A1 offenbart. Auch JP 2008 097 991 beschreibt einen Folienkondensator mit einer Mehrzahl von Folien, welche als ein Folienwickel ausgebildet sein können.

Aus WO 2011/018 434 A2 und WO 2017/191 135 A2 sind jeweils kapazitive Bauteile mit einer Mehrzahl von Kondensatoren bekannt, welche in einer Gitterstruktur angeordnet sind.

Erfindungsgemäß sind die Folienwickel in einer Gitterstruktur unter Auslassung eines inneren Gitterplatzes nebeneinander angeordnet, und ist die Aufnahme von dem durch die Auslassung frei gebliebenen Hohlraum gebildet. Mit anderen Worten bleibt in einer regelmäßigen zwei- oder dreidimensionalen Anordnung der Folienwickel ein mittlerer Platz frei, welcher als Aufnahme für das Entlademodul dienen kann. Auf diese Weise ist ein in der Aufnahme angeordnetes Entlademodul von Folienwickeln des Zwischenkreiskondensators umgeben und durch diese vor Deformation geschützt.

Weiterhin erfindungsgemäß umfasst der Zwischenkreiskondensator eine die Folienwickel einfassende Ummantelung, welche mehrere sich nach innen erstreckende Vorsprünge aufweist, welche ein elektrisch leitfähiges Material aufweisen oder aus einem elektrisch leitfähigen Material bestehen. Ein Folienwickel umfasst eine positive Elektrode und eine negative Elektrode sowie ein zwischen der positiven Elektrode und der negativen Elektrode angeordnetes Dielektrikum, welches die beiden Elektroden voneinander elektrisch isoliert. Die elektrisch leitfähigen Vorsprünge dringen bei einer entsprechenden unfallbedingten Deformation der Ummantelung des Zwischenkreiskondensators in die anliegenden Folienwickel ein und sorgen auf diese Weise für einen Kurzschluss der beiden Elektroden der Folienwickel. Die kurzgeschlossenen Folienwickel werden durch den Kurzschlussstrom praktisch instantan entladen.

Ferner sind die Vorsprünge erfindungsgemäß entlang einer Umfangsrichtung der Ummantelung äquidistant angeordnet. Bei einer solchen Anordnung kann die Ummantelung ihre bestimmungsgemäße Wirkung bei jeder Deformationsrichtung entfalten. Entsprechend kann der Zwischenkreiskondensator bezogen auf eine vorherrschende oder wahrscheinlichste Deformationsrichtung mit einer beliebigen Orientierung in dem Fahrzeug montiert werden.

Erfindungsgemäß weist zudem ein Vorsprung an seinem inneren Ende eine Spitze auf. In weiteren Ausführungsformen weist jeder Vorsprung an seinem inneren Ende eine Spitze auf und weist insbesondere ein zu der jeweiligen Erstreckungsrichtung paralleler Querschnitt eines Vorsprungs und bevorzugt jedes Vorsprungs eine Dreiecksform auf. Spitze Vorsprünge benötigen zum Eindringen in die Folienwickel eine geringe Kraft. Wenn die Ummantelung durch Pressen eines Blechs hergestellt wird, können Vorsprünge mit einer Dreiecksform ihres Querschnitts in der Erstreckungsrichtung besonders einfach vorgesehen werden. Eine Möglichkeit besteht darin, kegelförmige Vorsprünge auszubilden. Alternativ können die Vorsprünge auch als längliche V-förmige Strukturen vorgesehen sein, die sich parallel zueinander erstrecken.

Vorteilhaft umfasst der Zwischenkreiskondensator ein Gehäuse, welches die Ummantelung einfasst und insbesondere ein elektrisch leitfähiges Material oder ein elektrisch isolierendes Material aufweist. Das Gehäuse kann glatte Außenflächen des Zwischenkreiskondensators bereitstellen. Je nach der Einbausituation kann es vorteilhaft sein, das Innere des Zwischenkreiskondensators elektrisch von seiner Einbauumgebung zu isolieren oder aber leitfähig mit ihr zu verbinden. Im letzteren Fall werden sowohl die positiven Elektroden als auch die negativen Elektroden der Folienwickel der Zwischenkreiskondensatoren infolge eines Eindringens der Vorsprünge in die Folienwickel zusätzlich mit dem Chassis und/oder der Fahrzeugkarosserie, welche eine elektrische Masse des Fahrzeugs bilden, kurzgeschlossen, um Potentialdifferenzen zwischen dem Zwischenkreiskondensator und weiteren Bauteilen des Fahrzeugs auszuschließen.

Ein Zwischenkreiskondensator, in dessen Gehäuse ein Entlademodul angeordnet ist, wird in DE 10 2015 217 287 A1 offenbart.

Gegenstand der Erfindung ist auch eine Baugruppe für ein elektromotorisch angetriebenes Fahrzeug, mit einem erfindungsgemäßen Zwischenkreiskondensator und einem Entlademodul, welches in der Aufnahme des Zwischenkreiskondensators angeordnet ist. Durch die konstruktive Integration des Entlademoduls in den Zwischenkreiskondensator entsteht eine kompakte Baugruppe, welche das Entlademodul effektiv vor unfallbedingten Deformationen schützen kann.

In weiteren Ausführungsformen umfasst das Entlademodul eine Leiterplatte, einen auf der Leiterplatte fixierten Entladewiderstand und/oder einen auf der Leiterplatte fixierten Entladeschalter, welcher insbesondere als ein elektrischer Schalter, als ein mechanischer Schalter oder als ein elektromechanischer Schalter ausgebildet ist. Dabei sind der Entladeschalter und der Entladewiderstand in Reihe geschaltet und mit den positiven Elektroden und den negativen Elektroden der Folienwickel des Zwischenkreiskondensators elektrisch leitend verbunden. Für den Entladeschalter können neben den genannten auch alternative Varianten verwendet werden.

In einer bevorzugten Ausführungsform umfasst das Entlademodul eine Ansteuerleitung, welche sich von dem Entlademodul zu einer Außenseite des Zwischenkreiskondensators erstreckt und insbesondere zwischen zwei benachbarten Folienwickeln des Zwischenkreiskondensators angeordnet ist. Im Falle eines elektrischen Schalters ohne bewegliche Teile oder eines elektromechanischen Schalters, beispielsweise eines Relais, wird das zum Verstellen des Entladeschalters in einen Entladezustand oder eine Entladestellung erforderliche Schaltsignal über eine Ansteuerleitung bereitgestellt, welche sich von außen durch Zwischenräume der Folienwickel zu dem Entlademodul erstreckt.

Ein weiterer Gegenstand der Erfindung ist ein elektromotorisch angetriebenes Fahrzeug, insbesondere Hybridfahrzeug oder Elektrofahrzeug, welches eine erfindungsgemäße Baugruppe umfasst. Elektromotorisch angetriebene Fahrzeuge, deren Zwischenkreiskondensatoren in Gestalt der oben beschriebenen Baugruppe mit einem Entlademodul vorgesehen werden, besitzen eine besonders hohe Entladesicherheit der Zwischenkreiskondensatoren im Falle eines Unfalls. Entweder kann das Entlademodul bei dem Unfall intakt bleiben und den Zwischenkreiskondensator, wie vorgesehen, entladen. Aber auch, wenn der Zwischenkreiskondensator und mit ihm das in der Aufnahme angeordnete Entlademodul funktionsuntüchtig deformiert wird, stellen die in die Folienwickel eindringenden Vorsprünge der Ummantelung eine sichere Entladung des Zwischenkreiskondensators sicher.

Die Erfindung ist anhand einer Ausführungsform in den Zeichnungen schematisch dargestellt und wird unter Bezugnahme auf die Zeichnungen weiter beschrieben. Es zeigt:
- Figur 1: in einer schematischen Querschnittsansicht eine Ausführungsform einer erfindungsgemäßen Baugruppe;
- Figur 2: in einer schematischen Querschnittsansicht ein vergrößertes Detail eines Folienwickels eines Zwischenkreiskondensators.

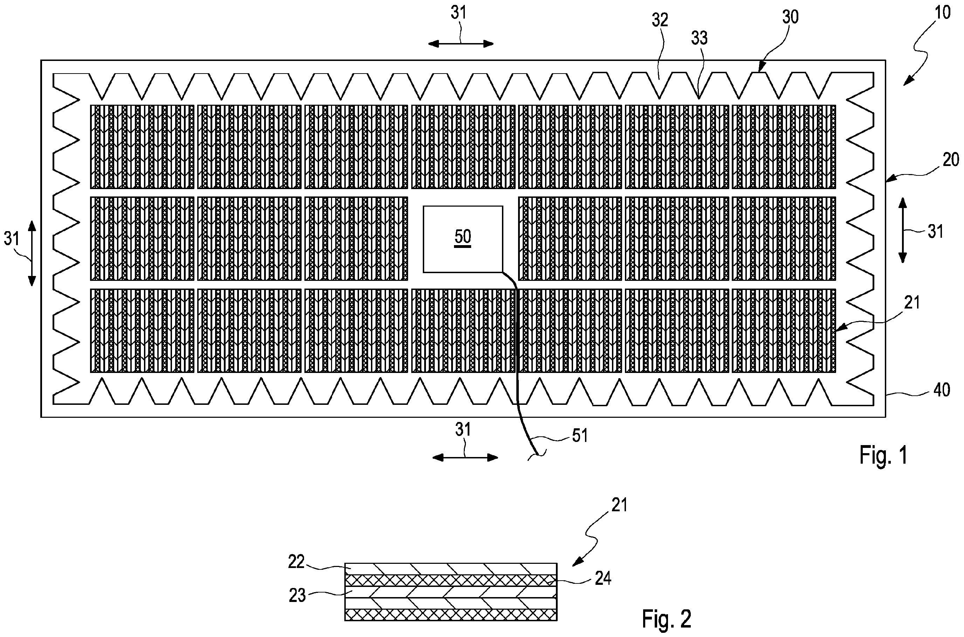

Figur 1 zeigt in einer schematischen Querschnittsansicht eine Ausführungsform einer erfindungsgemäßen Baugruppe 10 für ein elektromotorisch angetriebenes Fahrzeug. Entsprechend kann ein elektromotorisch angetriebenes Fahrzeug, beispielsweise ein Hybridfahrzeug oder ein Elektrofahrzeug, eine solche Baugruppe 10 umfassen. Die Baugruppe 10 kann als Teil eines Wechselrichters einem Elektromotor des Fahrzeugs oder für sich genommen einer weiteren Hochvoltkomponente des Fahrzeugs zugeordnet sein.

Die Baugruppe 10 umfasst einen Zwischenkreiskondensator 20, welcher in seinem Inneren eine Aufnahme 25 für ein Entlademodul 50 des Fahrzeugs aufweist. Der Zwischenkreiskondensator 20 umfasst mehrere Folienwickel 21.

Figur 2 zeigt in einer schematischen Querschnittsansicht ein vergrößertes Detail eines Folienwickels 21 eines Zwischenkreiskondensators 20. Der Folienwickel 21 besitzt einen mehrschichtigen Aufbau mit einer positiven Elektrode 22, einer negativen Elektrode 23 und einem Dielektrikum 24, welches zwischen der positiven Elektrode 22 und der negativen Elektrode 23 angeordnet ist, und die beiden Elektroden 22, 23 des Folienwickels elektrisch voneinander isoliert, um eine Kondensatorfunktion bereitzustellen.

Zurückkommend zur Figur 1 sind die Folienwickel 21 in einer Gitterstruktur unter Auslassung eines inneren Gitterplatzes nebeneinander angeordnet. Die Aufnahme 25 ist von dem durch die Auslassung frei gebliebenen Hohlraum gebildet.

Ferner umfasst der Zwischenkreiskondensator 20 eine die Folienwickel 21 einfassende Ummantelung 30, welche mehrere sich nach innen erstreckende Vorsprünge 32 aufweist, welche ein elektrisch leitfähiges Material aufweisen oder aus einem elektrisch leitfähigen Material bestehen. Die Vorsprünge 32 sind entlang einer Umfangsrichtung 31 der Ummantelung 30 äquidistant angeordnet. Jeder Vorsprung 32 weist an seinem inneren Ende eine Spitze 33 auf. Dabei besitzt ein zu der Erstreckungsrichtung paralleler Querschnitt jedes Vorsprungs 32 eine Dreiecksform.

Der Zwischenkreiskondensator 20 umfasst zudem ein Gehäuse 40, welches die Ummantelung 30 einfasst und je nach Einbausituation ein elektrisch leitfähiges Material oder ein elektrisch isolierendes Material aufweist.

Die Baugruppe 10 umfasst weiterhin ein Entlademodul 50, welches in der Aufnahme 25 des Zwischenkreiskondensators 20 angeordnet ist. Das Entlademodul 50 hat eine Leiterplatte, einen auf der Leiterplatte fixierten Entladewiderstand und/oder einen auf der Leiterplatte fixierten Entladeschalter, welcher als ein elektrischer Schalter, als ein mechanischer Schalter oder als ein elektromechanischer Schalter ausgebildet ist.

Zudem umfasst das Entlademodul 50 eine Ansteuerleitung 51, welche sich von dem Entlademodul 50 zu einer Außenseite des Zwischenkreiskondensators 20 erstreckt und zwischen zwei benachbarten Folienwickeln 21 des Zwischenkreiskondensators 20 angeordnet ist.

Ein Vorteil des erfindungsgemäßen Zwischenkreiskondensators besteht darin, dass er ein ihm zugeordnetes Entlademodul in seinem Inneren aufnehmen kann, um es vor unfallbedingten Deformationen zu schützen und die bestimmungsgemäße Funktion des Entlademoduls nach einem Unfall mit hoher Wahrscheinlichkeit zu gewährleisten. Ein weiterer Vorteil ist darin zu sehen, dass der erfindungsgemäße Zwischenkreiskondensator mit einem ihm zugeordneten Entlademodul zu einer sehr kompakten Baugruppe kombiniert werden kann. Diese benötigt nur geringen Bauraum und weist ein geringes Gewicht auf. Zudem kann die Baugruppe auch in Bereichen des Fahrzeugs angeordnet werden, welche bei einem Unfall starken Deformationskräften ausgesetzt sind, woraus sich eine vergrößerte konstruktive Freiheit ergibt. Abgesehen davon sind keine außerhalb des Zwischenkreiskondensators verlaufenden elektrischen Verbindungsleitungen zu der Entladeeinheit erforderlich, die infolge eine Unfalls beschädigt oder durchtrennt werden könnten.

### BEZUGSZEICHENLISTE:

- 10: Baugruppe
- 20: Zwischenkreiskondensator
- 21: Folienwickel
- 22: positive Elektrode
- 23: negative Elektrode
- 24: Dielektrikum
- 25: Aufnahme
- 30: Ummantelung
- 31: Umfangsrichtung
- 32: Vorsprung
- 33: Spitze
- 40: Gehäuse
- 50: Entlademodul
- 51: Ansteuerleitung

## Patentansprüche

1. Baugruppe (10) für ein elektromotorisch angetriebenes Fahrzeug, mit einem einer Hochvoltkomponente des Fahrzeugs zugeordneten Zwischenkreiskondensator (20), welcher mehrere Folienwickel (21) umfasst und in seinem Inneren eine Aufnahme (25) für ein Entlademodul (50) der Hochvoltkomponente zum Entladen des Zwischenkreiskondensators (20) aufweist, und einem Entlademodul (50), welches in der Aufnahme (25) angeordnet ist, **dadurch gekennzeichnet, dass** die Folienwickel (21) in einer Gitterstruktur unter Auslassung eines inneren Gitterplatzes nebeneinander angeordnet sind und die Aufnahme (25) von einem durch die Auslassung frei gebliebenen Hohlraum gebildet ist und der Zwischenkreiskondensator (20) eine die Folienwickel (21) einfassende Ummantelung (30) umfasst, welche mehrere sich nach innen erstreckende Vorsprünge (32) aufweist, welche ein elektrisch leitfähiges Material aufweisen oder aus einem elektrisch leitfähigen Material bestehen und entlang einer Umfangsrichtung (31) der Ummantelung (30) äquidistant angeordnet sind, wobei ein Vorsprung (32) an seinem inneren Ende eine Spitze (33) aufweist.

2. Baugruppe nach Anspruch 1, bei welcher jeder Vorsprung (32) an seinem inneren Ende eine Spitze (33) aufweist und insbesondere ein zu der jeweiligen Erstreckungsrichtung paralleler Querschnitt eines Vorsprungs (32) und bevorzugt jedes Vorsprungs (32) eine Dreiecksform aufweist.

3. Baugruppe nach Anspruch 1 oder 2, bei welcher der Zwischenkreiskondensator (20) ein Gehäuse (40) umfasst, welches die Ummantelung (30) einfasst und insbesondere ein elektrisch leitfähiges Material oder ein elektrisch isolierendes Material aufweist.

4. Baugruppe nach einem der Ansprüche 1 bis 3, bei welcher das Entlademodul (50) eine Leiterplatte, einen auf der Leiterplatte fixierten Entladewiderstand und/oder einen auf der Leiterplatte fixierten Entladeschalter, welcher insbesondere als ein elektrischer Schalter, als ein mechanischer Schalter oder als ein elektromechanischer Schalter ausgebildet ist, umfasst.

5. Baugruppe nach einem der Ansprüche 1 oder 4, bei welcher das Entlademodul (50) eine Ansteuerleitung (51) umfasst, welche sich von dem Entlademodul (50) zu einer Außenseite des Zwischenkreiskondensators (20) erstreckt und insbesondere zwischen zwei benachbarten Folienwickeln (21) des Zwischenkreiskondensators (20) angeordnet ist.

6. Elektromotorisch angetriebenes Fahrzeug, insbesondere Hybridfahrzeug oder Elektrofahrzeug, mit einer Baugruppe (10) nach einem der Ansprüche 1 bis 5.

## Claims

1. Assembly (10) for an electric motor-driven vehicle, with an intermediate circuit capacitor (20) assigned to a high-voltage component of the vehicle, which intermediate circuit capacitor comprises a plurality of film windings (21) and has, in its interior, a mount (25) for a discharge module (50) of the high-voltage component for discharging the intermediate circuit capacitor (20), and a discharge module (50) which is arranged in the mount (25), **characterised in that** the foil windings (21) are arranged next to one another in a lattice structure with the omission of an inner lattice site, and the mount (25) is formed by a cavity left free by the omission, and the intermediate circuit capacitor (20) comprises a sheath (30) which encloses the foil windings (21), which sheath has a plurality of inwardly extending projections (32), which comprise an electrically conductive material or are made of an electrically conductive material and are arranged equidistantly along a circumferential direction (31) of the sheath (30), wherein a projection (32) has a point (33) at its inner end.

2. Assembly according to claim 1, in which each projection (32) has a point (33) at its inner end and in particular has a cross-section of a projection (32) parallel to the respective direction of extension and preferably each projection (32) has a triangular shape.

3. Assembly according to claim 1 or 2, in which the intermediate circuit capacitor (20) comprises a housing (40) which encloses the sheath (30) and in particular comprises an electrically conductive material or an electrically insulating material.

4. Assembly according to any of claims 1 to 3, in which the discharge module (50) comprises a printed circuit board, a discharge resistor fixed on the printed circuit board and/or a discharge switch fixed on the printed circuit board, which discharge switch is configured in particular as an electric switch, as a mechanical switch or as an electromechanical switch.

5. Assembly according to any of claims 1 or 4, in which the discharge module (50) comprises a drive line (51) which extends from the discharge module (50) to an outer side of the intermediate circuit capacitor (20) and is arranged in particular between two adjacent foil windings (21) of the intermediate circuit capacitor (20).

6. Electric motor-driven vehicle, in particular hybrid vehicle or electric vehicle, having an assembly (10) according to any of claims 1 to 5.

## Revendications

1. Ensemble (10) pour un véhicule automobile entraîné par moteur électrique, avec un condensateur de circuit intermédiaire (20) affecté à un composant haute tension du véhicule automobile, lequel comprend plusieurs bobines de film (21) et présente en son intérieur un logement (25) pour un module de décharge (50) du composant haute tension pour décharger le condensateur de circuit intermédiaire (20), et un module de décharge (50), lequel est disposé dans le logement (25), **caractérisé en ce que** les bobines de film (21) sont disposées côte à côte dans une structure de grille avec omission d'un espace de grille intérieur et le logement (25) est formé par une cavité laissée libre par l'omission, et le condensateur de circuit intermédiaire (20) comprend une gaine (30) entourant les bobines de film (21), laquelle présente plusieurs saillies (32) s'étendant vers l'intérieur, lesquelles présentent un matériau électroconducteur ou consistent en un matériau électroconducteur et sont disposées de manière équidistante le long d'une direction circonférentielle (31) de la gaine (30), dans lequel une saillie (32) présente une pointe (33) à son extrémité intérieure.

2. Ensemble selon la revendication 1, dans lequel chaque saillie (32) présente une pointe (33) à son extrémité intérieure et en particulier une section transversale d'une saillie (32) parallèle à la direction d'extension respective et de préférence chaque saillie (32) présente une forme triangulaire.

3. Ensemble selon la revendication 1 ou 2, dans lequel le condensateur de circuit intermédiaire (20) comprend un boîtier (40), lequel entoure la gaine (30) et présente en particulier un matériau électroconducteur ou un matériau électro-isolant.

4. Ensemble selon l'une quelconque des revendications 1 à 3, dans lequel le module de décharge (50) comprend un circuit imprimé, une résistance de décharge fixée sur le circuit imprimé et/ou un interrupteur de décharge fixé sur le circuit imprimé, lequel est réalisé en particulier comme un interrupteur électrique, comme un interrupteur mécanique ou comme un interrupteur électromécanique.

5. Ensemble selon l'une quelconque des revendications 1 ou 4, dans lequel le module de décharge (50) comprend une ligne de commande (51), laquelle s'étend du module de décharge (50) vers un côté extérieur du condensateur de circuit intermédiaire (20) et est disposée ensemble entre deux bobines de film (21) adjacentes du condensateur de circuit intermédiaire (20).

6. Véhicule automobile entraîné par moteur électrique, en particulier véhicule hybride ou véhicule électrique, avec un ensemble (10) selon l'une quelconque des revendications 1 à 5.
